# EUROPÄISCHE PATENTSCHRIFT

(11) **EP 0 498 205 B1**
(45) Veröffentlichungstag und Bekanntmachung des Hinweises auf die Patenterteilung: **12.10.1994**
(21) Anmeldenummer: 92100905.6
(22) Anmeldetag: 21.01.1992
(51) Int. Cl.: B60K 20/02, F16C 11/06

(54) **Schalthebellagerung für Kraftfahrzeuge**
Gear lever mounting for motor vehicles
Montage de levier de vitesses pour véhicules à moteur

(30) Priorität: 08.02.1991 DE 4103762
(43) Veröffentlichungstag der Anmeldung: 12.08.1992
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Sabel, Gustav, W-5000 Köln 71 (DE)
(74) Vertreter: Messulam, Alec Moses

(56) Entgegenhaltungen:
- DE-A- 3 531 780
- DE-A- 3 833 557
- US-A- 4 285 250
- US-A- 4 457 188

## Beschreibung

Die Erfindung bezieht sich auf eine Schalthebellagerung für Kraftfahrzeuge, der im Oberbegriff des Patentanspruches erläuterten Art.

Aus der DE-OS 38 33 557, insbesondere deren Fig. 1, ist eine solche Schalthebellagerung für Kraftfahrzeuge bekannt, die aus in einem Schaltungsgehäuse in einer Bohrung aufgenommenen oberen und unteren Kugelhalbschalen aus Kunststoff und einem zwischen diesen aufgenommenen, am Schalthebel ausgebildeten oder befestigten Kugelabschnitt besteht, an dem zwei seitlich auskragende Zapfen ausgebildet sind, die mit zwei entsprechend angeordneten, vertikalen Nuten in den Kugelhalbschalen die Neutralebene des Schalthebels festlegend zusammenwirken.

Die beiden Kugelhalbschalen sind hierbei an ihrer Trenn- oder Teilungsfuge kürzer gehalten, damit sie nach Einbau des Schalthebels mit seinem Kugelabschnitt durch eine Federanordung vertikal elastisch verspannt werden können um eine spielfreie Lagerung des Schalthebels sicherzustellen. Die am Schalthebel seitlich auskragenden Zapfen, die mit den entsprechend vertikalen Nuten in den Kugelhalbschalen zusammenwirken, machen bei einer Auswahl einer Schaltgasse eine Querbewegung in der Neutralebene des Schalthebels bei der sich die seitlich auskragenden Zapfen nach oben bzw. unten bewegen, dabei gleiten sie jeweils über die im Bereich der vertikalen Nuten vorhandenen Kanten der horizontalen Trenn- oder Teilungsfuge.

Diese Kanten in den vertikalen Nuten beeinträchtigen daher das Schaltgefühl am Schalthebel, indem sie unregelmäßige Erschütterungen am Schalthebel hervorrufen und indem sie durch frühzeitigen Verschleiß ein ungenaues Gefühl in der Lage der Neutralebene des Schalthebels vermitteln. Die Zapfen am Schalthebel können bei ungünstigen Verhältnissen die vertikal vorgespannten Lagerschalen beim Schalten auseinanderdrücken.

Aus der DE-OS 35 31 780, insbesondere deren Fig. 2 und 3 ist eine Schalthebellagerung für Kraftfahrzeuge ähnlich der im Oberbegriff erläuterten Art bekannt.

Bei dieser bekannten Ausführungsform erfolgt die Teilung in eine untere und eine obere Kugelschale nicht im Verlauf einer durch den Mittelpunkt des Kugelabschnittes verlaufenden horizontalen Ebene, sondern die Teilung erfolgt insoweit ungleichmäßig, als die untere Kugelschale den Hauptteil des Kugelabschnittes am Schalthebel vollständig umfaßt und die entsprechenden vertikalen Nuten zur Aufnahme eines seitlichen Zapfens aufweist, was voraussetzt, daß der obere eingeschnürte Bereich der unteren Kugelschale zur Ermöglichung der Montage des Kugelabschnittes entweder vom Material her sehr elastisch nachgebend ausgebildet sein muß oder der obere Bereich der unteren Kugelschale durch vertikale radiale Einschnitte nachgebend ausgebildet werden muß.

In beiden Fällen kann die erforderliche größere Nachgiebigkeit des Materials oder die Anordnung von Schlitzen zu einer unpräziseren Abstützung des Kugelabschnittes und damit des Schalthebels führen.

Die Aufgabe der Erfindung ist es, eine Schalthebellagerung der im Oberbegriff des Patentanspruches erläuterten Art mit einfachen Mitteln so zu verbessern, daß der oben erwähnte Nachteil nicht mehr auftritt.

Gemäß der Erfindung wird diese Aufgabe gelöst, indem eine Schalthebellagerung gemäß dem Oberbegriff des Patentanspruches die im Kennzeichenteil des Patentanspruches 1 aufgezeigten Merkmale aufweist.

Dadurch wird lediglich durch ein geändertes Werkzeug für die erfindungsgemäßen Kugelhalbschalen bei unveränderten Kosten und unveränderter Montage eine wesentliche Verbesserung des Schaltgefühles erreicht.

Anspruch 2 beschreibt eine weitere Variationsmöglichkeit.

Die Erfindung wird anhand eines in der Zeichnung gezeigten Ausführungsbeispieles näher erläutert. Es zeigt:
- Fig. 1: einen vertikalen Teilschnitt durch ein Schaltungsgehäuse eines Kraftfahrzeuges, mit geschnittenem Kunststoffkugellager und ungeschnittenem Schalthebel;
- Fig. 2: eine vergrößerte Darstellung der Schalthebellagerung lediglich bestehend aus den beiden Kugelhalbschalen und dem in Strich-Punkt-Linien gezeigten Schalthebel und
- Fig. 3: einen Schnitt entlang der Linie III-III in Fig. 2.

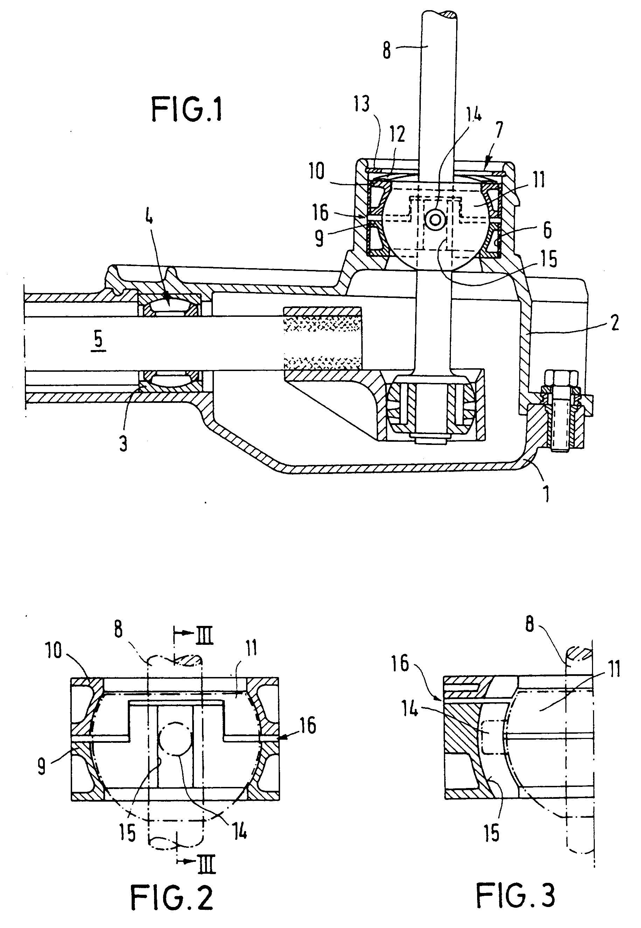

In Fig. 1 besteht ein Schaltungsgehäuse aus einem Gehäuse 1 und einem Deckel 2, wobei im Gehäuse 1 eine Lageraufnahme 3 für ein Kunststoffgleitlager 4 für eine Schubstange 5 und im Deckel 2 eine Lageraufnahmebohrung 6 für ein zweiteiliges Kunststoffkugellager 7 für einen Schalthebel 8 angeordnet ist.

Das Kunststoffkugellager 7 besteht in bekannter Weise aus einer unteren Kugelhalbschale 9 und einer oberen Kugelhalbschale 10, die zwischen sich einen Kugelabschnitt 11 aufnehmen, der entweder am Schalthebel 8 ausgebildet oder an diesen befestigt ist.

Die beiden Kugelhalbschalen 9 und 10 werden vorzugsweise über eine Feder 12 und einen diese abstützenden Sprengring 13 in vertikaler Richtung axial gegeneinander verspannt, damit eine spielfreie Aufnahme des Kugelabschnittes 11 des Schalthebels 8 gewährleistet wird.

Der am Schalthebel 8 ausgebildete Kugelabschnitt 11 ist mit zwei seitlich auskragenden Zapfen 14 versehen, die in Verbindung mit entsprechenden seitlichen vertikalen Nuten 15 in den beiden Kugelhalbschalen die Neutralebene des Schalthebels 8 festlegend zusammenwirken.

Die horizontale Trenn- oder Teilungsfuge 16 zwischen der unteren und der oberen Kugelhalbschale 9 und 10 verspringt gemäß der Erfindung kurz vor dem Bereich der vertikalen Nuten 15 so weit nach oben oder ggf. bei einer anderen Ausführungsform nach unten und danach wieder nach unten bzw. wieder nach oben, daß sich die vertikalen Gleitbewegungen der seitlich auskragenden Zapfen 14 bei einer Auswahl der Schaltgassen jeweils nur in einem nicht unterbrochenen Nutenabschnitt entweder der unteren oder der oberen Kugelhalbschale 9 oder 10 bewegen.

Dadurch wird auf einfache Weise sichergestellt, daß beim Gleiten der seitlich auskragenden Zapfen 14 in den vertikalen Nuten 15 keine durch das Überlaufen der Trenn- oder Teilungsfuge bewirkten Erschütterungen oder Unregelmäßigkeiten, die das Schaltgefühl beeinträchtigen, auftreten. Damit wird weiterhin ein frühzeitiger Verschleiß der seitlichen Nuten und damit eine ungenaue Führung des Schalthebels in seiner Neutralebene vermieden.

Für besondere Anwendungsfälle kann es zweckmäßig sein, wenn der Versatz in der Trennfläche der Kugelhalbschalen an jeder Seite unterschiedlich ist, d.h. z.b. links nach oben und rechts nach unten verspringend, wodurch bei einer Schalthebellagerung, mit z.B. geneigter Lage, für die Schaltgasse für den 1. und 2. Gang Ausgleichsmöglichkeiten gegeben sind.

## Patentansprüche

1. Schalthebellagerung für Kraftfahrzeuge, die aus in einem Schaltungsgehäuse (1) in einer Bohrung (6) aufgenommenen unteren und oberen Kugelhalbschalen (9 und 10) aus Kunststoff und einem zwischen diesen aufgenommenen, am Schalthebel (8) ausgebildeten oder befestigten Kugelabschnitt (11) besteht, an dem zwei seitlich auskragende Zapfen (14) ausgebildet sind, die mit zwei entsprechend angeordneten, vertikalen Nuten (15) in den Kugelhalbschalen (9 und 10) die Neutralebene des Schalthebels (8) festlegend zusammenwirken,
**dadurch gekennzeichnet**, daß
- die durch den Mittelpunkt des Kugelabschnittes (11) verlaufende horizontale Trenn- oder Teilungsfuge (16) zwischen der unteren und der oberen Kugelhalbschale (9 und 10) nur im Bereich der Nuten (15) derart senkrecht nach oben oder unten verspringend angeordnet ist, daß die vertikalen Gleitbewegungen der seitlich auskragenden Zapfen (14) bei Auswahl einer Schaltgasse innerhalb eines nicht unterbrochenen Nutenabschnittes erfolgen.

2. Schalthebellagerung nach Anspruch 1,
**dadurch gekennzeichnet**, daß
- das Verspringen der horizontalen Trenn- oder Teilungsfuge (16) in senkrechter Richtung für einen Zapfen nach oben und für den anderen Zapfen nach unten erfolgt.

## Claims

1. Gear change lever mounting for motor vehicles comprising lower and upper hemispherical shells (9 and 10) of plastics material accommodated in a bore (6) in a gear change housing (1) and accommodating between them a spherical section (11), formed on or secured to the gear change lever (8), on which are formed two laterally projecting pins (14) which cooperate with two corresponding vertical grooves (15) in the hemispherical shells (9 and 10) to locate the neutral plane of the gear change lever (8),
characterised in that
- the horizontal separating or dividing joint (16) between the lower and upper hemispherical shells (9 and 10) passing through the middle point of the spherical section (1) is arranged only in the region of the grooves (15) to jump away vertically upwards or downwards so that the vertical sliding movements of the laterally projecting pins (14) when selecting a gate arm take place within an uninterrupted section of groove,

2. Gear change lever mounting according to claim 1,
characterised in that
- the jumping away of the horizontal separating or dividing joint (16) in the vertical direction takes place upwards for one pin and downwards for the other pin.

## Revendications

1. Système de montage d'un levier sélecteur de vitesses pour véhicules automobiles, comprenant des demi-rotules inférieure et supérieure (9 et 10) en matière plastique, logées dans un alésage (6) pratiqué dans un boîtier (1) de changement de vitesses, ainsi qu'une région sphérique (11) intercalée entre lesdites demi-rotules, ménagée ou fixée sur le levier sélecteur (8) , et sur laquelle sont façonnés deux tourillons (14) qui font saillie latéralement et coopèrent, en déterminant de manière fixe le plan neutre du levier sélecteur (8), avec deux gorges verticales (15) occupant des positions correspondantes dans les demi-rotules (9 et 10),
caractérisé par le fait que
- le joint horizontal (16) de séparation ou de partage entre les demi-rotules inférieure et supérieure (9 et 10), passant par le centre de la région sphérique (11), est disposé avec décalage vertical vers le haut ou vers le bas, uniquement au voisinage des gorges (15), de telle sorte que les mouvements verticaux de glissement des tourillons (14) saillant latéralement s'opèrent, lors de la sélection d'un couloir de changement de vitesses, à l'intérieur d'un segment de gorge ininterrompu.

2. Système de montage d'un levier sélecteur de vitesses, selon la revendication 1,
caractérisé par le fait que
- le décalage du joint horizontal (16) de séparation ou de partage a lieu, dans le sens vertical, vers le haut pour un tourillon et vers le bas pour l'autre tourillon.
